# EUROPÄISCHE PATENTSCHRIFT

(11) **EP 0 627 188 B1**
(45) Veröffentlichungstag und Bekanntmachung des Hinweises auf die Patenterteilung: **21.05.1997**
(21) Anmeldenummer: 94105665.7
(22) Anmeldetag: 13.04.1994
(51) Int. Cl.: A47J 31/44

(54) **Brühgetränkemaschine**
Brewing apparatus
Appareil pour préparer des infusions

(30) Priorität: 01.06.1993 DE 4318113
(43) Veröffentlichungstag der Anmeldung: 07.12.1994
(73) Patentinhaber: Braun Aktiengesellschaft, Frankfurt am Main (DE)
(72) Erfinder: Ullmann, Roland, D-63075 Offenbach (DE)

(56) Entgegenhaltungen:
- DE-U- 8 914 876
- DE-U- 9 112 320
- GB-A- 2 229 354
- US-A- 4 995 311

## Beschreibung

Die Erfindung betrifft eine Brühgetränkemaschine mit einer aus deren Gehäuse längs einer Bewegungsebene herausnehmbaren Filtereinheit, die eine nach oben offene und von einem oberen Rand gebildete Öffnung aufweist, wobei in die Filtereinheit Zutaten, wie Kaffeemehl oder Teeblätter, zur Brühgetränkeherstellung aufgenommen werden können, wobei die Öffnung der Filtereinheit im eingesetzten Zustand unter einer Abdeckung zu liegen kommt, in der ein Auslaß für Brühwasser ausgebildet ist, aus dem dieses über die Öffnung in die Filtereinheit und von dort unter Extraktion einer Zutat als ein Brühgetränk in ein darunter abgestelltes Gefäß abfließen kann, wobei der überwiegende Teil des oberen Randes der Filtereinheit in einer ersten Ebene liegt, wobei weiterhin der mit dem überwiegenden Teil des oberen Randes zusammenwirkende Bereich der Abdeckung in einer zweiten Ebene liegt und wobei im eingesetzten Zustand der Filtereinheit die erste und die zweite Ebene parallel zueinander verlaufen und nahe übereinander angeordnet sind (siehe die Druckschrift US-A-4 995 311).

Eine weitere derartige Brühgetränkemaschine wurde bereits im Handel unter der Bezeichnung Braun Traditional 2, Typ KF 35, von der Anmelderin vertrieben, wie sie aus der Programmübersicht, Stand Februar 1983, auf Seite 28 dargestellt ist. Bei dieser Brühgetränkemaschine wird die Filtereinheit in eine am Gehäuse ausgebildete und horizontal verlaufende Kulissenführung eingesetzt, die die Bewegungsebene der Filtereinheit darstellt. Bei dieser Anordnung verlaufen die Bewegungsebene, der obere Rand der Filtereinheit, also die erste Ebene, und der mit dem oberen Rand der Filtereinheit zusammenwirkende Bereich der Abdeckung, also die zweite Ebene, parallel zueinander, d.h., wenn die Filtereinheit über die Bewegungsebene in das Gehäuse eingesetzt wird und dabei der obere Rand der Filtereinheit nicht an dem mit diesem zusammenwirkenden Bereich der Abdeckung anschlagen oder ständig schleifen soll, muß zwischen diesen beiden Ebenen ein merklicher Abstand vorhanden sein.

Aufgrund der bei der Herstellung der einzelnen Teile der Brühgetränkemaschine sich zwangsweise ergebenden Herstelltoleranzen kann dies letztendlich bei dieser Brühgetränkemaschine dazu führen, daß der Abstand nach Montage dieser Teile zwischen der ersten und zweiten Ebene oft zu groß ist, so daß beim Brühvorgang über diesen Spalt zuviel Wärme und Aromastoffe entweichen und dadurch der Aufbrühvorgang nicht unter optimalen Bedingungen abläuft. Hieraus ergibt sich einerseits, daß das Kaffeemehl nicht optimal extrahiert wird und andererseits ein Brühgetränk entsteht, das oftmals schon zu kalt und weniger aromareich ist. Sind hingegen die Toleranzen zu klein, so kann der obere Rand der Filtereinheit beim Einsetzen ständig an der Abdeckung schleifen oder hakeln.

Des weiteren werden von der Anmelderin seit vielen Jahren Brühgetränkemaschinen unter der Bezeichnung Braun Aromaster 10 bzw. 12, Typen KF 42 bis KF 92, vertrieben, wie sie in der Programmübersicht, Herbst 1989, auf den Selten 40 bis 43, dargestellt und beschrieben sind. Bei diesen Brühgetränkemaschinen erfolgt die Bewegung der Filtereinheit längs der Bewegungsebene durch Schwenken um eine senkrecht zu dieser verlaufende und Im Gehäuse angeordnete Schwenkachse. Dabei verlaufen ebenfalls die Bewegungsebene sowie die erste und zweite Ebene parallel zueinander, so daß sich zwangsweise, wie bereits oben beschrieben, derselbe Nachteil einstellt.

Aufgabe der Erfindung Ist es nun, eine Brühgetränkemaschine zu schaffen, bei der im eingesetzten Zustand der Filtereinheit im Gehäuse der obere Rand der Filtereinheit stets dichtend an der die Öffnung der filtereinheit von oben verschließenden Abdeckung, nämlich dem eigentlichen Brühkopf, anliegt, in dem der Auslaß für das Brühwasser angeordnet ist. Des weiteren soll beim Herausnehmen der Filtereinheit aus dem Gehäuse ein Entlangschleifen des oberen Randes der Filtereinheit an dem mit ihm zusammenwirkenden Bereich der Abdeckung vermieden werden.

Diese Aufgabe wird erfindungsgemäß durch die Merkmale des Patentanspruchs 1 gelöst.

Dadurch, daß sowohl die erste als auch die zweite Ebene gegenüber der Bewegungsebene der Filtereinheit geneigt ist, entfernt sich beim Herausschwenken der Filtereinheit ihr oberer Rand stetig von dem mit diesem zusammenwirkenden Bereich der Abdeckung, also der zweiten Ebene, so daß die Filtereinheit, ohne an der Abdeckung stets zu klemmen, aus dieser ungehindert herausgenommen werden kann. Beim Einsetzen der Filtereinheit nähert sich hingegen ihr oberer Rand dem mit diesem zusammenwirkenden Bereich der Abdeckung so lange, bis er dichtend an der Unterseit der Abdeckung anliegt. Genau in dieser Stellung ist die Filtereinheit von oben her verschlossen, so daß ein Entweichen von Wärme und Aroma weitgehendst vermieden wird. Beim Heranführen der Filtereinheit an das Gehäuse bildet die Filtereinheit mit ihrer Bewegungsebene und ihrem oberen Rand in Nähe des eingesetzten Zustandes die Funktion eines Spaltes, der zwischen der Bewegungsebene und dem mit dem oberen Rand der Filtereinheit zusammenwirkenden Bereich der Abdeckung so lange in diesen Freiraum hineingeschoben wird, bis die Filtereinheit diesen offenen Spaltraum vollständig verschließt und die durch die erste und zweite Ebene gebildeten Flächen des oberen Randes der Filtereinheit und der Unterseite der Abdeckung dichtend aneinanderliegen.

Mit der Erfindung wird weiterhin der Vorteil erreicht, daß beim Herausnehmen der Filtereinheit die an der Unterseite der Abdeckung hervorstehenden Gehäuseteile des Brühkopfes förmlich von den mit dem oberen Rand der Filtereinheit zusammenwirkenden Bereichen der Filtereinheit unterfahren werden können, bis die Filtereinheit gänzlich aus dem Gehäuse herausgeschwenkt ist. Dadurch, daß beim Brühvorgang anhand der Erfindung kaum Dampf mehr aus der Filtereinheit entweichen kann, wird darüber hinaus auch die zur Verfügung stehende Wassermenge praktisch vollkommen als Brühgetränk genutzt.

Sofern die Filtereinheit von vorne her über die Bewegungsebene in das Gehäuse eingesetzt wird, verlaufen die erste und zweite Ebene zwar geneigt zur Bewegungsebene aber stets zueinander parallel, wobei sich beim Einsetzen der Abstand der beiden Ebenen ständig verringert, bis sie dichtend aneinanderliegen.

Durch die Weiterbildung der Erfindung gemäß Anspruch 2 ergibt sich im eingesetzten Zustand der Filtereinheit zwar auch eine Parallelstellung der ersten und zweiten Ebene, diese wird aber erst dann erreicht, wenn die Filtereinheit vollständig in das Gehäuse eingesetzt ist, also wenn der obere Rand gegen die Unterseite der Abdeckung fährt. Bei herausgeschwenkter Filtereinheit verläuft nämlich die zweite Ebene quer zur ersten Ebene. Durch die Schwenkachse ergibt sich eine einfachere Handhabung der Filtereinheit, die auch nach Herausschwenken der Filtereinheit am Gehäuse eingehängt bleiben kann. In dieser Stellung kann die Filtereinheit mit einer Filtertüte und einer Zutat beschickt oder von diesen nach Gebrauch entfernt werden.

Durch die Weiterbildung der Erfindung nach Anspruch 3 ergibt sich der Vorteil, daß dann, wenn der mit dem oberen Rand der Filtereinheit zusammenwirkende Bereich der Abdeckung Abschnitte aufweist, die sich zu weit von der zweiten Ebene der Unterseite der Abdeckung zur Filtereinheit hin abheben, nun von dem verbleibenden Teil des oberen Randes, der unterhalb der ersten Ebene verläuft, unterfahren werden kann, wenn dies durch den oberen Rand der Filtereinheit nicht mehr erreicht wird. Dies kommt im allgemeinen nur für den Bereich der Filtereinheit in Betracht, der im eingeschwenkten Zustand der Filtereinheit von außen nicht sichtbar ist, also der Teil, der dem Gehäuse dann am nächsten ist.

Bei einer Einrichtung gemäß Anspruch 4 wird die maximale Füllhöhe der Filtereinheit nicht allzu stark eingeschränkt und dennoch verändert sich beim Herausschwenken die Spaltbreite zwischen der ersten und zweiten Ebene schnell genug. Gute Ergebnisse werden bereits bei einem Neigungswinkel von 4° erzielt.

Durch die Weiterbildung der Erfindung gemäß Anspruch 5 wird erreicht, daß die eingesetzte Filtereinheit im Betrieb der Brühgetränkemaschine stets dichtend mit dem Gehäuse verschlossen ist.

Mit der Weiterbildung nach Anspruch 6 ergibt sich der Vorteil, daß, nachdem der obere Rand der Filtereinheit dichtend an der Unterseite der Abdeckung, also an der Unterseite des Brühkopfes, anliegt, zusätzlich eine am Gehäuse ausgebildete Arretier- oder Schnappvorrichtung in die Filtereinheit eingreift, die bewirkt, daß die Filtereinheit stets zum Gehäuse federnd gedrückt wird, so daß sich die erste und zweite Ebene stets mit Vorspannung dichtend berühren.

Gemäß Anspruch 7 kann die Dichtheit noch durch einen elastisch verformbaren Dichtring verbessert werden, der den Kontakt vom oberen Rand der Filtereinheit und dem mit diesem zusammenwirkenden Bereich der Unterseite der Abdeckung herstellt.

Zwei Ausführungsbeispiele der Erfindung sind in der Zeichnung dargestellt und werden Im folgenden näher erläutert. Es zeigen:
- Fig. 1: Seitenansicht von links auf ein erstes Ausführungsbeispiel einer Brühgetränkemaschine mit der in das Gehäuse eingeschwenkten Filtereinheit, wobei die Filtereinheit um eine Schwenkachse drehbar ist
- Fig. 2: Draufsicht von oben auf die in Fig. 1 dargestellte Brühgetränkemaschine,
- Fig. 3: Seitenansicht auf die Brühgetränkemaschine gemäß Fig. 1, wobei jedoch die Filtereinheit teilweise aus dem Gehäuse herausgeschwenkt ist,
- Fig. 4: Draufsicht von oben auf die in Fig. 3 dargestellte Brühgetränkemaschine,
- Fig. 5: Vorderansicht auf die in Fig. 1 dargestellte Brühgetränkemaschine,
- Fig.6: Vorderansicht auf die in Fig. 3 dargestellte Brühgetränkemaschine,
- Fig. 7: Vorderansicht auf die in Fig. 3 dargestellte Brühgetränkemaschine, wobei jedoch die Filtereinheit gänzlich aus dem Gehäuse herausgeschwenkt ist,
- Fig. 8: Teillängsschnitt durch die Brühgetränkemaschine im Bereich der Filtereinheit gemäß der Schnittführung VIII-VIII nach Fig. 2,
- Fig. 9: Teillängsschnitt durch die Filtereinheit und die Abdeckung gemäß der Schnittführung IX-IX nach Fig. 8 und
- Fig. 10: Längsschnitt durch ein zweites Ausführungsbeispiel einer Brühgetränkemaschine, bei der die Filtereinheit von vorne her über eine Gleitführung horizontal aus dem Gehäuse herausnehmbar ist.

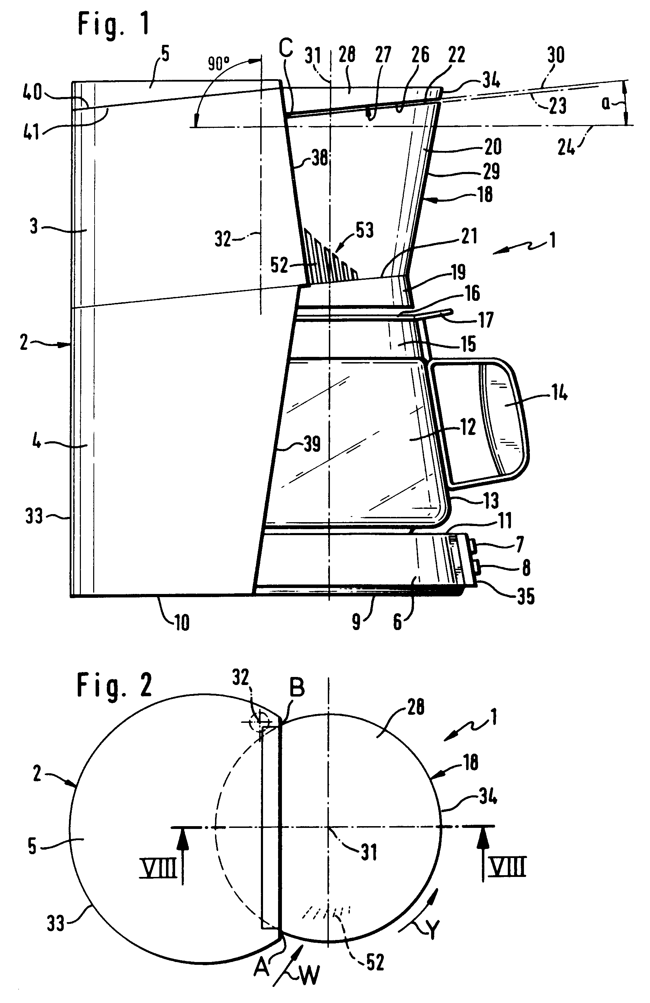

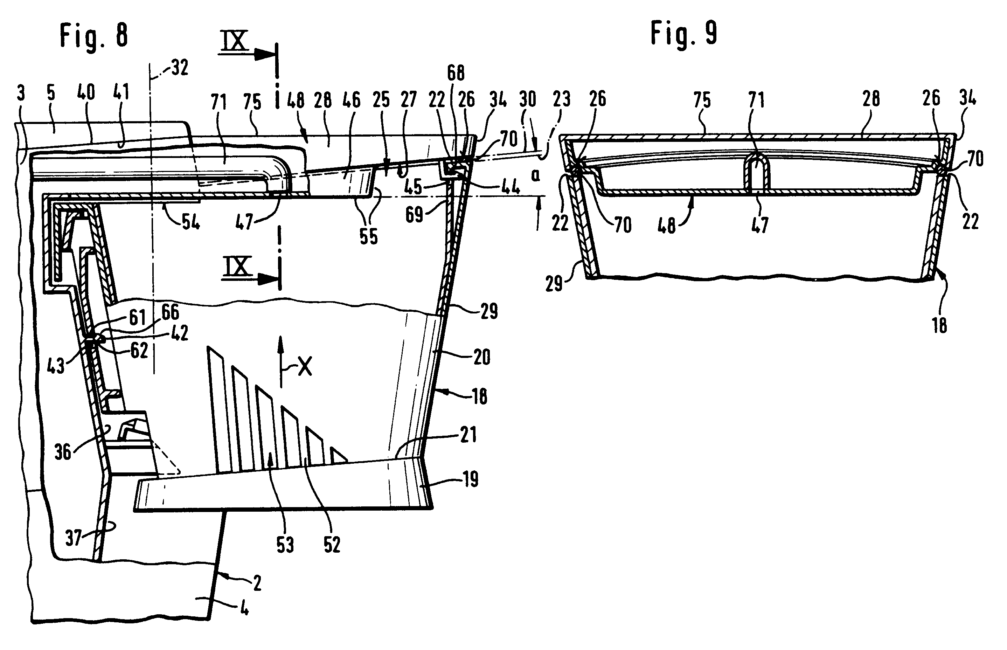

Nach den Figuren 1 bis 10 besteht die Brühgetränkemaschine 1 aus einem im wesentlichen im Querschnitt halbzylinderförmigen und säulenartig ausgebildeten Gehäuse 2, dessen oberer Teil einerseits den Wassertank 3 und dessen unterer Teil andererseits das Trageteil 4 bildet, in dem die Kaltwasser-Rohrleitung zum Durchlauferhitzer (nicht dargestellt) und die Heißwasser-Rohrleitung 71 (Fig. 8 und 9) vom Durchlauferhitzer sowie Teile der Elektronik (nicht dargestellt) untergebracht sind. Der Wassertank 3 ist von oben her von einem nach oben aufschwenkbaren Deckel 5 verschlossen. An das Trageteil 4 schließt sich nach Fig. 1 nach rechts ein sich nach oben verjüngender, kegelstumpfförmiger Sockel 6 an, in dem der elektrische Durchlauferhitzer ausgebildet ist, der über an der Vorderseite des Sockels 6 angebrachte elektrische Schalter 7, 8 steuerbar ist. Die Unterseite 9 des Sockels 6 verläuft mit der Unterseite 10 des Trageteils 4 auf einer horizontalen Ebene und bildet somit die Standfläche der Brühgetränkemaschine 1.

Auf der Oberseite 11 des Sockels 6 ist eine Warmhalteplatte (nicht dargestellt) eingesetzt, auf der gemäß den Figuren 1, 3 bis 7 und 10 ein Gefäß 12 abgestellt ist. Die Warmhalteplatte steht mit dem im Sockel 6 ausgebildeten Durchlauferhitzer in Wärmekontakt. An der Außenseite 13 des Gefäßes 12 ist ein Griff 14 befestigt. Am Rand der Öffnung des Gefäßes 12 ist ein Kunststoffrand 15 angebracht, der mit einer dem Griff 14 gegenüberliegenden Ausgießtülle (nicht dargestellt) versehen ist. Die Öffnung des Kunststoffrandes 15 ist von einem Deckel 16 verschlossen, der über eine Handhabe 17 vom Kunststoffrand 15 abnehmbar ist. Das Gefäß 12 weist eine sich nach oben verjüngende kegelstumpfförmige Gestalt auf.

Senkrecht oberhalb schließt sich nach den Figuren 1, 3, 5 bis 8 und 10 an den Deckel 16 die einteilig ausgeformte Filtereinheit 18 an, die im wesentlichen aus zwei Gehäuseabschnitten 19, 20 be steht. Während der untere Gehäuseabschnitt 19 im wesentlichen der Kontur des Gefäßes 12 folgt, also sich ebenfalls nach oben kegelstumpfförmig verjüngt, erweitert sich der anschließende Gehäuseabschnitt 20 nach oben hin. Die Höhe des Gehäuseabschnitts 19 beträgt etwa 1/6 der Höhe des Gehäuseabschnitts 20, wobei der Übergang der Gehäuseabschnitte 19, 20 durch die Trennlinie 21 angezeigt wird.

Der obere Rand 22 der Filtereinheit 18 verläuft nach den Figuren 1, 9 und 10 In einer ersten Ebene 23, die senkrecht auf der Zeichenebene steht und die einen Winkel a mit der Bewegungsebene 24 der Filtereinheit 18 bildet. Der obere Rand 22 verläuft zumindest in dem Bereich in der ersten Ebene 23, in dem er von außen her rund um die Filtereinheit 18 sichtbar ist, also in dem Bereich, der zwischen den Punkten A und B gemäß Fig. 2 liegt. Gleiches gilt auch für den Ringbereich 26 an der Unterseite 27 der Abdeckung 28, der die Öffnung 25 der Filtereinheit 18 von oben her verschließt, damit, wenn die Filtereinheit 18 in die Brühgetränkemaschine 1 eingeschwenkt ist, wie dies die Figuren 1, 2, 5 und 8 bis 10 zeigen, die Mantelfläche 29 der Filtereinheit 18 mit der Mantelfläche 34 der Abdeckung 28 eine nahezu nahtlos übergehende Kegelfläche bildet.

Die Unterseite 27 der Abdeckung 28 bildet zumindest in dem Bereich 26 eine zweite Ebene 30, die parallel zur ersten Ebene 23 verläuft, wenn die Filtereinheit 18, wie dies die Figuren 1, 5 und 10 zeigen, in das Gehäuse 2 eingesetzt ist, also ihre Brühstellung einnimmt. Zur Verdeutlichung ist in den Figuren 1, 5 und 10 der obere Rand 22 in geringem Abstand zum Ringbereich 26 gezeichnet, was aber in der Praxis am Gerät nur eine dünne dunkle Linie ergibt, da der obere Rand 22 dichtend an dem Ringbereich 26 und somit fast spielfrei anliegt, wenn man von Herstellungstoleranzen hierbei absieht.

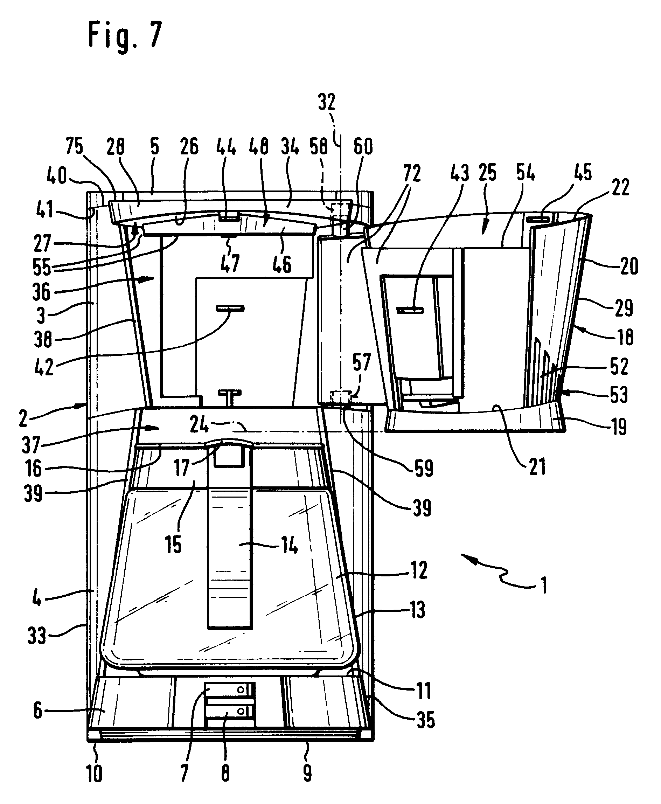

Die Bewegungsebene 24 der Filtereinheit 18 verläuft parallel zur Unterseite 9, 10, bzw. senkrecht zur gemeinsamen Längsachse 31, die sich für die Filtereinheit 18, das Gefäß 12 und den Sockel 6 ergibt, wenn die Filtereinheit 18 die in den Figuren 1, 2, 5 und 8 bis 10 dargestellte Schließstellung eingenommen hat. Gemäß den Figuren 1 bis 9 ist die Filtereinheit 18 um eine am äußeren Rand des Gehäuses 2 ausgebildete Schwenkachse 32 aus dem Gehäuse 2 gemäß der Pfeilrichtung Y gemäß Fig. 2 entgegen dem Uhrzeigersinn herausschwenkbar, wobei die Schwenkachse 32 senkrecht zur Bewegungsebene 24 verläuft, wie dies Fig. 1 deutlich zeigt. Die Schwenkachse 32 wird dabei von im Gehäuse 2 ausgebildeten und senkrecht übereinander angeordneten Bohrungen 57, 58 (Fig. 7) gebildet, in die Zapfen 59, 60 eines Schwenkarms 72 drehbar eingreifen (gestrichelt dargestellt), in den die Filtereinheit 18 eingehängt ist, wobei zur Reinigung diese auch aus dem Schwenkarm 72 nach oben ausgehängt werden kann.

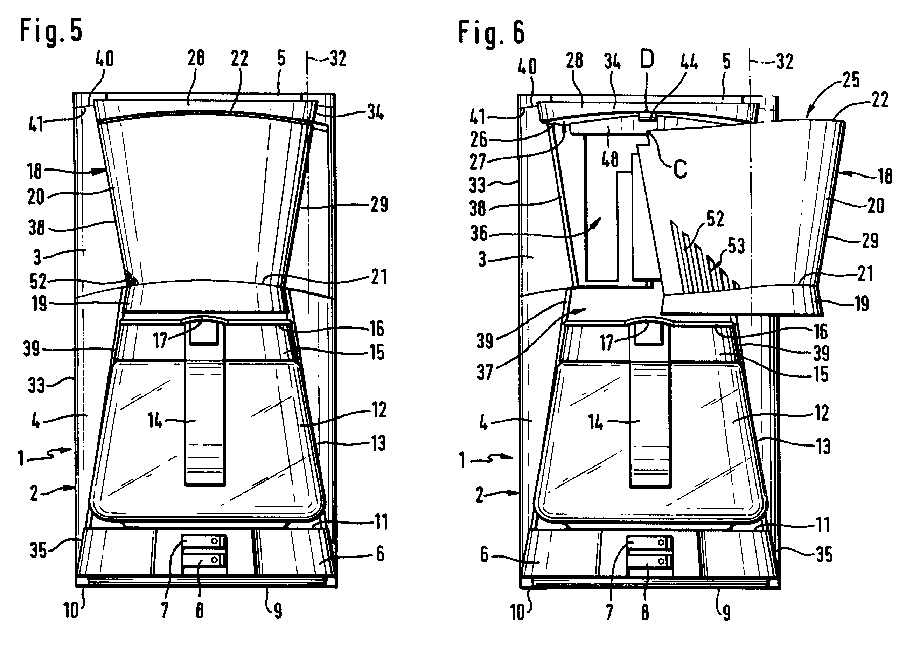

Da die Mantelflächen 34, 29, 13 und 35 der Abdeckung 28, der Filtereinheit 18, des Gefäßes 12 und des Sockels 6 Kegel bilden, die nach Fig. 2 teilweise in das Gehäuse 2 eingreifen, sind am Gehäuse 2 gemäß der Vorderansicht nach den Figuren 6 und 7 entsprechend angepaßte, im wesentlichen halbkegelförmige Ausnehmungen 36, 37 ausgebildet, die am Übergang zur Mantelfläche 33 des Gehäuses 2 von oben nach unten schräg verlaufenden Kanten 38, 39 bilden. Die Ausnehmungen 36, 37 dienen somit zur teilweisen Aufnahme der Abdeckung 28, der Filtereinheit 18, des Gefäßes 12 und des Sockels 6.

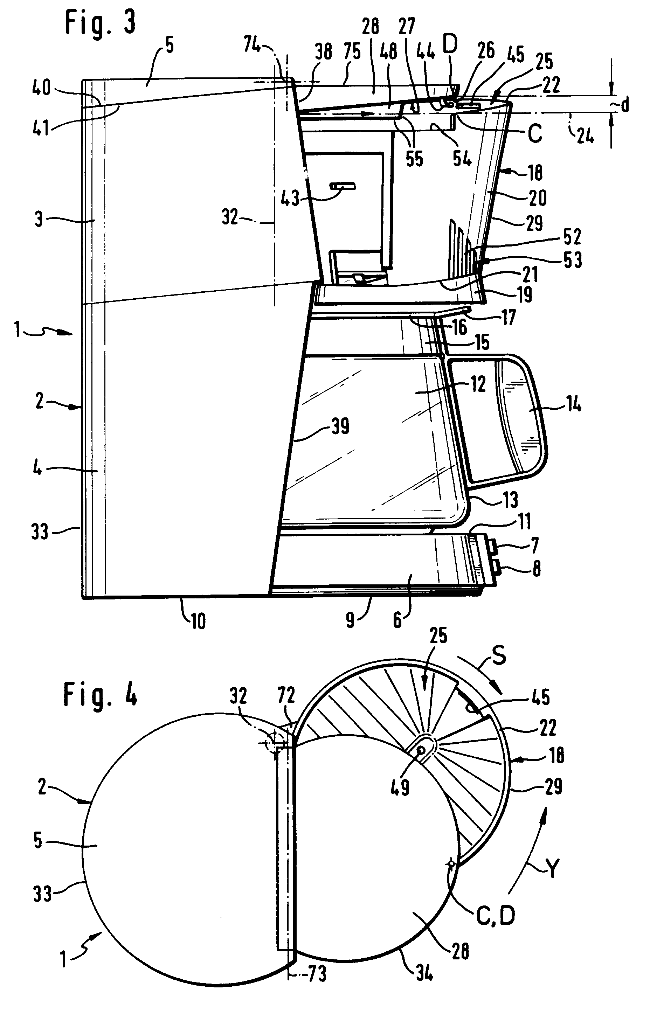

Wie aus Fig. 1 weiter hervorgeht, verlaufen auch der obere Rand 40 des Wassertanks 3 und die Unterkante 41 des Deckels 5 parallel zueinander und bilden ebenfalls den Winkel a zur horizontal verlaufenden Bewegungsebene 24, zu der natürlich dann auch der Wasserstand des Wassers im Wassertank 3 parallel verläuft, wenn dieser mit Wasser gefüllt ist. Durch den schrägen Verlauf des oberen Randes 40 des Wassertanks 3 wird einer Bedienungsperson deutlicher angezeigt, wann der Wassertank 3 voll mit Wasser gefüllt ist, da sich der Wasserstand gegenüber dem schräg verlaufenden Rand 40 besser abhebt. Wie aus den Figuren 3 und 4 ersichtlich, ist die Schwenkachse 73 des Deckels am Übergang vom Wassertank 3 zur Abdeckung 28 angeordnet und liegt in einer solchen Höhe, gekennzeichnet durch den Schwenkpunkt 74, daß der Deckel 5 im Uhrzeigersinn so weit aufgeklappt werden kann, daß er auf der Oberseite 75 der Abdeckung 28 zu liegen kommt. Hierdurch ist ein einfaches Einfüllen von Wasser von vorne her möglich, ohne daß der Deckel 5 dabei im Wege ist.

Wie aus der Fig. 7 ersichtlich, ist im hinteren Bereich der Ausnehmung 36 eine Arretiervorrichtung 42 in Form einer Zunge vorgesehen, die bei vollständig in das Gehäuse 2 eingesetzter Filtereinheit 18, wie dies Fig. 1 zeigt, über eine an ihr angebrachte Vertiefung 61 in einen an der Filtereinheit ausgebildeten Schlitz 43 am Rand 62 federnd einrastet (Fig. 8), so daß die Filtereinheit 18, die in Fig. 1 dargestellte Schließstellung beibehält. Gemäß Fig. 8 weist die Arretiervorrichtung 42 an ihrer Oberseite am freien Ende eine Rampe 66 auf, die dazu dient, daß der obere Rand 62 des Schlitzes 43 zunächst dort anschlägt und bei weiterer Betätigung in Schließrichtung S der Filtereinheit 18 (Fig. 4) diese geringfügig auch in Richtung X (Fig. 8) anhebt, so daß der obere Rand 22 der Filtereinheit 18 gegen den Ringbereich 26 an der Unterseite 27 der Abdeckung 28 mit Vorspannung gedrückt wird, um so die Öffnung 25 der Filtereinheit 18 nach außen hin dichtend zu verschließen. Auch hier wird derselbe Andrückeffekt, wie zuvor beschrieben, erreicht.

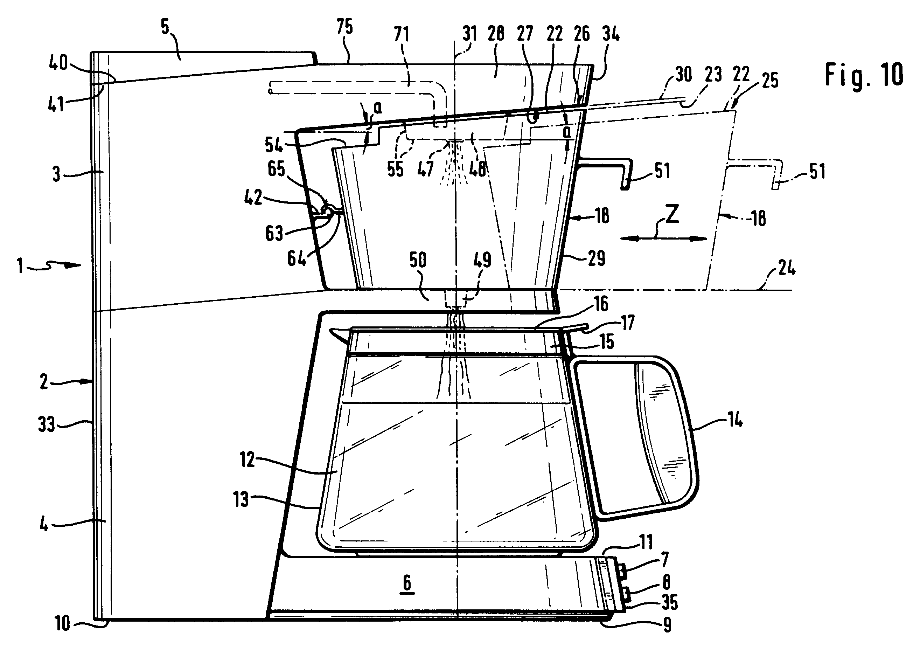

Nach Fig. 10 besteht die Arretiervorrichtung 42 aus einer Zunge mit einer Erhebung 63, die in eine an einer weiteren Zunge 64 angebrachte Vertiefung 65 federnd eingreift, wobei die Zunge 64 Teil der Filtereinheit 18 ist.

Gemäß den Figuren 7 und 8 ist am vorderen Bereich der Abdeckung 28 eine zweite Arretiervorrichtung 44 mit einer zweiten Vertiefung 68 vorgesehen, die in eine entsprechend an der Vorderseite der Filtereinheit 18 ausgebildete Wandung 69 eines zweiten Schlitzes 45 federnd eingreift, wie dies bereits zuvor beschrieben wurde. Durch beide Arretiervorrichtungen 42, 44, die in die zugeordneten Schlitze 43, 45 federnd eingreifen, wird eine besonders gleichmäßige Anlage des oberen Randes 22 der Filtereinheit 18 rundum an der Unterseite 27 der Abdeckung 28 erreicht.

Wie aus den Figuren 7 und 8 weiter hervorgeht, steht an der Unterseite 27 der Abdeckung 28 im mittleren Bereich eine im wesentlichen kreisscheibenförmige Erhebung 46 nach unten zur Filtereinheit 18 hervor, die mit einer zentralen Auslaßöffnung 47 versehen ist. Die Erhebung 46 bildet mit der Abdeckung 28 den eigentlichen Brühkopf 48 der Brühgetränkemaschine 1, in den von dem Durchlauferhitzer (nicht dargestellt) über die Heißwasser-Rohrleitung 71 heißes Wasser eingepumpt wird, dort angesammelt wird und aus der zentralen Auslaßöffnung 47 über die Öffnung 25 in die Filtereinheit 18 fließt, wo sich das Brühgetränk mit dem darin befindlichen Kaffeemehl oder den Teeblättern vermischt, diese auslaugt und als Brühgetränk über einen an der Unterseite der Filtereinheit 18 ausgebildeten Auslaß 49, wie dies angedeutet aus Fig. 10 hervorgeht, in das darunter abgestellte Gefäß 12 einfließt.

Die Brühgetränkemaschine 1 gemäß Fig. 10 unterscheidet sich von der Brühgetränkemaschine 1 nach den Figuren 1 bis 9 lediglich dadurch, daß die Filtereinheit 18 nicht um eine Schwenkachse, sondern in einer horizontal verlaufenden Gleitführung 50 geführt wird und daß die Filtereinheit 18 durch die horizontale Verschieberichtung Z von vorne in das Gehäuse 2 eingeschoben wird.

Zum Herausnehmen der Filtereinheit 18 weist diese an der Vorderseite nach Fig. 10 einen Handgriff 51 auf, während nach den Figuren 1 bis 9 hierfür an der Mantelfläche 29 der Filtereinheit 18 eine durch senkrecht verlaufende Rippen 52 gekennzeichnete Grifffläche 53 ausgebildet ist, die, wenn sie durch eine Querkraft, etwa in Richtung W nach Fig. 2, von Hand beaufschlagt wird, eine Öffnung der Filtereinheit 18, wie dies Fig. 4 zeigt, bewirkt.

Nach den Figuren 3, 6, 7 und 10 weist die Oberseite der Filtereinheit 18 in dem in die Ausnehmung 36 eingreifenden Bereich einen gegenüber dem oberen Rand 22 tiefer gesetzten verbleibenden Teil 54 auf, der dazu erforderlich ist, daß beim Herausschwenken der Filtereinheit 18 aus der Ausnehmung 36 des Gehäuses 2 dieser Bereich nicht an der Erhebung 46, also an der Außenfläche 55 des Brühkopfes 48 anschlägt. Allerdings soll der Einschnitt am verbleibenden Teil 54 möglichst klein sein.

Nach den Figuren 8 und 9 ist im Ringbereich 26 noch eine Ringdichtung 70 angebracht, die ein noch dichteres Verschließen des oberen Randes 22 der Filtereinheit 18 gegenüber der Abdeckung 28 hervorruft.

Die Wirkungsweise der dargestellten Brühgetränkemaschine ist folgende.

Hat die Filtereinheit 18 die in den Figuren 1, 2, 5 und 8 bis 10 dargestellte Schließstellung eingenommen, so liegt der obere Rand 22 der Filtereinheit 18 dichtend an dem an der Unterseite 27 der Abdeckung 28 ausgebildeten Ringbereich 26 an. Es kann nun ein Brühgetränk gebrüht werden, wobei der heiße Dampf, der mit dem aus der Auslaßöffnung 47 austretenden Brühwasser entsteht, nicht ins Freie ausströmen kann. Soll nun beispielsweise nach Beendigung des Brühvorgangs der Papierfilter mit der Zutat (nicht dargestellt) aus der Filtereinheit 18 entnommen werden, so muß hierzu die Filtereinheit 18 aus dem Gehäuse 2 herausgeschwenkt werden. Dadurch, daß sowohl die erste Ebene 23 als auch die zweite Ebene 30 gegenüber der Bewegungsebene 24 um den Neigungswinkel a geneigt ist, nimmt der vertikale Abstand d zwischen einem auf dem Ringbereich 26 angenommenen Punkt D und den einem ihm senkrecht gegenüberliegenden Punkt C auf dem oberen Rand 22 folgenden Punkten stetig zu, so daß sich also der obere Rand 22 von dem Ringbereich 26 entfernt, wogegen im geschlossenen Zustand der Filtereinheit 18 der obere Rand 22 an dem Ringbereich 26 der Abdeckung 28 dichtend anliegt. Sobald also die Filtereinheit 18 ausgeschwenkt wird, entfernt sich der obere Rand 22 auch vertikal von der Ringfläche 26, so daß dieser nicht mehr die Ringfläche 26 berührt, wodurch die Filtereinheit 18 besonders leichtgängig aufschwenkbar ist.

Wird die Filtereinheit 18 wieder um die Schwenkachse 32 in die Ausnehmung 36 zurückbewegt, so schlägt der obere Rand 22 der Filtereinheit 18 an der Ringfläche 26 der Abdeckung 28 an. Ein Anschlagen der Filtereinheit 18 an der von der Ausnehmung 36 (Fig. 7 und 8) gebildeten Wandung darf bis zu dieser Stellung nicht erfolgen. Bei der Schließbewegung greift dabei die Arretiervorrichtung 42 in den ersten Schlitz 43 ein, wobei die Rampe 66 an dem oberen Rand 62 des Schlitzes 43 anschlägt und bei weiterer Verschiebung der Filtereinheit 18 diese leicht in Richtung X anhebt, bis der obere Rand 62 in die Vertiefung 61 einrastet. Da die Arretiervorrichtung 42 von einer federnden Zunge gebildet wird, wird die Filtereinheit 18 stets mit leichter Vorspannung in Richtung X über den oberen Rand 22 gegen den Ringbereich 26 gedrückt. Gleichzeitig wird durch diese Rastverbindung die Filtereinheit 18 in der Schließstellung ortsfest gehalten. Beim Öffnen der Filtereinheit muß auf die Grifffläche 53 eine radial von außen einwirkende Kraft in Richtung W ausgeübt werden, damit die Filtereinheit 18 aus der Arretiervorrichtung 42 gelöst und über die Schwenkachse 32 herausgeschwenkt werden kann.

Gemäß dem Ausführungsbeispiel nach Fig. 10 liegt die Filtereinheit 18 auf einer horizontal verlaufenden Gleitführung 50 auf, so daß beim Herausziehen der Filtereinheit 18 über den Handgriff 51 in Verschieberichtung Z diese horizontal verschoben wird und sich dabei die vom oberen Rand 22 gebildete erste Ebene 23 von der von der Unterseite 27 der Abdeckung 28 gebildeten zweiten Ebene 30 entfernt. Auch hier ist in jeder geöffneten Stellung der Filtereinheit 18, wie sie beispielsweise durch die Stellung gemäß der gestrichelten Linie dargestellt ist, keine Berührung mehr mit der Abdeckung 28 gegeben. Beim Einschieben der Filtereinheit 18 greift eine an der Zunge 64 ausgebildete Vertiefung 65 in eine Erhebung 63, die Teil einer am Gehäuse 2 befestigten Arretiervorrichtung 42 ist, derart federnd ein, daß die Filtereinheit 18 stets zum Gehäuse 2 in Verschieberichtung Z hin mit geringer Kraft gezogen wird, damit der obere Rand 22 stets auf Anlage an der Ringfläche 26 der Abdeckung 28 gehalten wird. Eine dauerhafte Abdichtung in diesem Bereich ist somit auch hier gegeben.

## Patentansprüche

1. Brühgetränkemaschine (1) mit einer aus deren Gehäuse (2) längs einer Bewegungsebene (24) heausnehmbaren Filtereinheit (18), die eine nach oben offene und von einem oberen Rand (22) gebildete Öffnung (25) aufweist, wobei in die Filtereinheit (18) Zutaten, wie Kaffeemehl oder Teeblätter, zur Brühgetränkeherstellung aufgenommen werden können, wobei die Öffnung (25) der Filtereinheit (18) im eingesetzten Zustand unter einer Abdeckung (28) zu liegen kommt, in der ein Auslaß (47) für Brühwasser ausgebildet ist, aus dem dieses über die Öffnung (25) in die Filtereinheit (18) und von dort unter Extraktion einer Zutat als ein Brühgetränk in ein darunter abgestelltes Gefäß (12) abfließen kann, wobei der überwiegende Teil des oberen Randes (22) der Filtereinheit (18) in einer ersten Ebene (23) liegt, wobei weiterhin der mit dem überwiegenden Teil des oberen Randes (22) zusammenwirkende Bereich (26) der Abdeckung (28) in einer zweiten Ebene (30) liegt und wobei im eingesetzten Zustand der Filtereinheit (18) die erste (23) und die zweite (30) Ebene parallel zueinander verlaufen und nahe übereinander angeordnet sind,
**dadurch gekennzeichnet**,
daß sowohl die erste (23) als auch die zweite (30) Ebene gegenüber der Bewegungsebene (24) um den Neigungswinkel (a) geneigt ist.

2. Brühgetränkemaschine nach Anspruch 1,
**dadurch gekennzeichnet**,
daß die Bewegung der Filtereinheit (18) längs der Bewegungsebene (24) durch Schwenken um eine senkrecht zu dieser verlaufende und im Gehäuse (2) angeordnete Schwenkachse (32) erfolgt.

3. Brühgetränkemaschine nach Anspruch 1 oder 2,
**dadurch gekennzeichnet**,
daß der obere Rand (22) der Filtereinheit (18) nur zum überwiegenden Teil in der ersten Ebene (23) liegt, daß der verbleibende Teil (54) des oberen Randes unterhalb der ersten Ebene (23) verläuft und daß die Abdeckung (28) eine aus der zweiten Ebene (30) herausragende Erhebung (46) aufweist, die bei eingesetzter Filtereinheit (18) in den verbleibenden Teil (54) verschließend eingreift.

4. Brühgetränkemaschine nach Anspruch 2,
**dadurch gekennzeichnet**,
daß der Neigungswinkel (a) zwischen der ersten (23) und zweiten (30) Ebene einerseits und der Bewegungsebene (24) andererseits zwischen 1° und 15°, vorzugsweise 4° beträgt.

5. Brühgetränkemaschine nach Anspruch 1,
**dadurch gekennzeichnet**,
daß die Abmessungen von Filtereinheit (18) und Gehäuse (2) so gewählt werden, daß beim Einsetzvorgang der Filtereinheit (18) in das Gehäuse (2) vor einem anderweitigen Anschlagen der Filtereinheit (18) am Gehäuse (2) schon eine Berührung des oberen Randes (22) der Filtereinheit (18) an der Unterseite (27) der Abdeckung (28) eintritt.

6. Brühgetränkemaschine nach Anspruch 4,
**dadurch gekennzeichnet**,
daß am Gehäuse (2) mindestens eine Arretiervorrichtung (42, 44) für die Filtereinheit (18) vorgesehen ist, die im eingesetzten Zustand mit dieser derart über Schlitze (43, 45) zu sammenwirkt, daß der obere Rand (22) der Filtereinheit (18) unter Vorspannung in Berührung an der Unterseite (27) der Abdeckung (28) gehalten wird.

7. Brühgetränkemaschine nach Anspruch 5,
**dadurch gekennzeichnet**,
daß am oberen Rand (22) der Filtereinheit (18) oder an der Unterseite (27) der Abdeckung (28) im Bereich der Anlage des oberen Randes (22) der Filtereinheit ein aus elastischem Material bestehender Dichtring (70) befestigt ist.

## Claims

1. A beverage brewing apparatus (1) with a filter assembly (18) which is removable from a brewer housing (2) along a plane of movement (24) and includes an opening (25) open on top and defined by an upper rim (22), wherein the filter assembly (18) is adapted to receive ingredients such as ground coffee beans or tea leaves for preparing a brew, wherein the opening (25) of the filter assembly (18) is located under a cover assembly (28) when the filter assembly is fully inserted into the brewer housing, wherein the cover assembly includes a discharge port (47) from which a brewing water flows through the opening (25) into the filter assembly (18) and thereafter, in extracting its contents to provide a brew, into a vessel (12) placed under the filter assembly, wherein a predominant portion of the upper rim (22) of the filter assembly (18) lies in a first plane (23), wherein an area (26) of the cover assembly (28) cooperates with the predominant portion of the upper rim (22) and lies in a second plane (30), wherein, with the filter assembly (18) fully inserted into the brewer housing, the first (23) and the second (30) planes are vertically disposed in close proximity to each other and extend parallel to each other,
**characterized in that** both the first (23) and the second (30) planes are inclined relative to the plane of movement (24) by an angle of inclination (a).

2. The beverage brewing apparatus as claimed in claim 1,
**characterized in that** the filter assembly (18) is moved along the plane of movement (24) by pivoting it about a pivot axis (32) arranged in the brewer housing (2) and extending vertically to said plane of movement.

3. The beverage brewing apparatus as claimed in claim 1 or claim 2,
**characterized in that** only the predominant portion of the upper rim (22) of the filter assembly (18) lies in the first plane (23) and the remaining portion (54) of the upper rim extends below the first plane (23), and the cover assembly (28) includes an elevation (46) projecting from the second plane (30) and engaging the remaining portion (54) in a closing fashion when the filter assembly (18) is fully inserted into the brewer housing.

4. The beverage brewing apparatus as claimed in claim 2,
**characterized in that** the angle of inclination (a) between the first (23) and the second (30) planes and the plane of movement (24) is between 1 and 15 degrees, preferably 4 degrees.

5. The beverage brewing apparatus as claimed in claim 1,
**characterized in that** the dimensions of the filter assembly (18) and the brewer housing (2) are selected such that, during insertion of the filter assembly (18) into the brewer housing (2), contact is established between the upper rim (22) of the filter assembly (18) and the underside (27) of the cover assembly (28) before the filter assembly (18) contacts another part of the brewer housing (2).

6. The beverage brewing apparatus as claimed in claim 4,
**characterized in that** the brewer housing (2) includes at least one locking device (42, 44) for the filter assembly (18) which cooperates therewith through the intermediary of slots (43, 45) when the filter assembly is fully inserted into the brewer housing, thereby causing the upper rim (22) of the filter assembly (18) to be maintained in biased engagement with the underside (27) of the cover assembly (28).

7. The beverage brewing apparatus as claimed in claim 5,
**characterized in that** a ring seal (70) made of an elastic material is affixed to the upper rim (22) of the filter assembly (18), or to the underside (27) of the cover assembly (28) in the area of abutting engagement of the upper rim (22) of the filter assembly.

## Revendications

1. Appareil pour préparer des infusions (1), comportant une unité de filtre (18) susceptible d'être enlevée hors de son boîtier (2) le long d'un plan de déplacement (24), ladite unité présentant une ouverture (25) vers le haut formée par une bordure supérieure (22), dans lequel des ingrédients, comme du café en poudre ou des feuilles de thé, peuvent être reçus dans l'unité de filtre (18), pour préparer des infusions, et dans lequel l'ouverture (25) de l'unité de filtre (18) vient, à l'état mis en place, au-dessous d'un couvercle (28) dans lequel est formée une sortie (47) pour l'eau d'ébouillantage, hors de laquelle cette eau peut s'écouler via l'ouverture (25) jusque dans l'unité de filtre (18) et depuis celle-ci, avec extraction d'un ingrédient sous forme d'une infusion dans un récipient (12) posé au-dessous, et dans lequel la majeure partie de la bordure supérieure (22) de l'unité de filtre (18) se trouve dans un premier plan (23), et dans lequel la région (26) du couvercle (28), qui coopère avec la majeure partie de la bordure supérieure (22), se trouve dans un second plan (30), et dans lequel le premier plan (23) et le second plan (30) s'étendent parallèlement l'un à l'autre et sont agencés proches l'un au-dessus de l'autre, à l'état mis en place de l'unité de filtre (18), caractérisé en ce que le premier plan (23) et également le second plan (30) sont inclinés de l'angle d'inclinaison (a) par rapport au plan de déplacement (24).

2. Appareil pour préparer des infusions selon la revendication 1, caractérisé en ce que le déplacement de l'unité de filtre (18) s'effectue le long du plan de déplacement (24) par basculement autour d'un axe de basculement (32) qui s'étend perpendiculairement à celui-ci et qui est agencé dans le boîtier (2).

3. Appareil pour préparer des infusions selon l'une ou l'autre des revendications 1 et 2, caractérisé en ce que la bordure supérieure (22) de l'unité de filtre (18) se trouve uniquement pour sa majeure partie dans le premier plan (23), en ce que la partie restante (54) de la bordure supérieure s'étend au-dessous du premier plan (23), et en ce que le couvercle (28) présente une bosse (46) qui dépasse hors du second plan (30) et qui s'engage avec fermeture dans la partie restante (54), lorsque l'unité de filtre (18) est Inise en place.

4. Appareil pour préparer des infusions selon la revendication 2, caractérisé en ce que l'angle d'inclinaison (a) entre le premier plan (23) et le second plan (30) d'une part et le plan de déplacement (24) d'autre part est de l'ordre de 1° à 15°, de préférence de 4°.

5. Appareil pour préparer des infusions selon la revendication 1, caractérisé en ce que les dimensions de l'unité de filtre (18) et du boîtier (2) sont choisies de telle sorte que lors de l'opération de mise en place de l'unité de filtre (18) dans le boîtier (2), avant que l'unité de filtre (18) bute contre le boîtier (2), il existe déjà un contact de la bordure supérieure (22) de l'unité de filtre (18) contre la face inférieure (27) du couvercle (28).

6. Appareil pour préparer des infusions selon la revendication 4, caractérisé en ce qu'il est prévu sur le boîtier (2) au moins un dispositif d'arrêt (42, 44) pour l'unité de filtre (18), qui coopère avec celle-ci, à l'état mis en place, par l'intermédiaire de fentes (43, 45), de telle sorte que la bordure supérieure (22) de l'unité de filtre (18) est maintenue sous précontrainte en contact contre la face inférieure (27) du couvercle (28).

7. Appareil pour préparer des infusions selon la revendication 5, caractérisé en ce qu'un joint d'étanchement (70) constitué en un matériau élastique est fixé sur la bordure supérieure (22) de l'unité de filtre (18) ou sur la face inférieure (27) du couvercle (28), dans la région de l'appui de la bordure supérieure (22) de l'unité de filtre.
